# EUROPEAN PATENT SPECIFICATION

(11) **EP 3 597 360 B1**
(45) Date of publication and mention of the grant of the patent: **16.03.2022**
(21) Application number: 19187402.3
(22) Date of filing: 19.07.2019
(51) Int. Cl.: B23Q 11/00, B27C 3/04

(54) **MACHINING ASSEMBLY FOR PROCESSING A PANEL**
BEARBEITUNGSEINRICHTUNG ZUR BEARBEITUNG EINER PLATTE
ENSEMBLE D'USINAGE POUR TRAITER UN PANNEAU

(30) Priority: 19.07.2018 IT 201800007340
(43) Date of publication of application: 22.01.2020
(73) Proprietor: SCM Group S.p.A., 47921 Rimini (RN) (IT)
(72) Inventor: BERTUCCIOLI, Alessandro, 47921 RIMINI (IT)
(74) Representative: Mulas, Chiara

(56) References cited:
- CN-Y- 201 405 404
- CN-Y- 201 405 423
- DE-A1-102008 029 774
- DE-A1-102010 028 241
- FR-A1- 2 865 678
- US-A- 3 502 124
- US-A- 5 238 336

## Description

This invention relates to a machining assembly for processing a semi-finished product, according to the preamble of claim 1. Such a machining assembly is known from the document CN 201 405 404 Y.

More specifically, the invention relates to a machining assembly for the processing for removing, in particular for perforating, panels, in particular panels made of wood or similar materials or materials replacing wood.

Italian patents No. IT1369302 and IT1378787, in the name of the same Applicant, relate top a perforating unit for perforating pieces of wood or similar materials comprising a perforating spindle shaft.

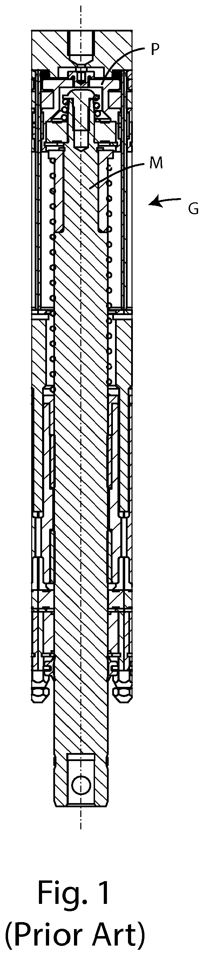

An example of a prior art perforating unit according to the technical teachings of the above-mentioned patents can be seen in Figure 1. The perforating unit G is equipped with a plurality of spindle shafts M arranged alongside each other (Figure 1 shows by way of example a perforating unit comprising a single spindle shaft M), according to a particular arrangement which depends on the type of perforating to be performed. Each spindle shaft M is designed to receive and support in rotation a shank of a perforating tool (not illustrated).

The spindle shafts M are arranged so as to be actuated independently towards or away from the piece to be perforated by a piston body P, such as, for example, a pneumatic piston, and by a return spring.

The perforating unit G also comprises a control and management device, designed to independently control each piston body P for making the desired perforation.

A problem of the prior art perforating units is the formation of a large quantity of swarf following the removal of material, for example by perforating, especially when there are several perforating tools. The swarf is generally sucked by means of special suction systems, however swarf can remain in the holes or cuts made in the semi-finished products.

A manual intervention by an operator is often needed in order remove this material, making the processing of the semi-finished products less efficient.

International patent application No. WO2009/100708 A2 describes a solution to this problem. The patent application describes a tools unit wherein the tool is provided with two channels through which compressed air is blown to remove the swarf formed by the perforating or cutting of the semi-finished products.

According to this solution there is an additional pneumatic user device connected to an additional conduit for blowing compressed air in the channels obtained in the tool. The solution is therefore complex, more costly and more cumbersome, since it requires further devices for channelling and management of the compressed air.

The Chinese patent CN 201405404 Y describes a similar solution, wherein the tool is equipped with a channel through which compressed air is blown to remove the swarf formed by the perforating or cutting of the semi-finished products. The compressed air is transferred from the chamber fed pneumatically to the through channel in the tool through a gap between the outer body tool-holder shaft and a through channel in said shaft, communicating with said channel in the tool.

However, this solution is not sufficiently efficient since it is based on a clearance between the elements, which is not generally recommended as it is less efficient.

The aim of this invention is to resolve the problems of the prior art, by means of a solution which reduces the need for manual intervention by operators for the removal of swarf formed by the perforation.

A further aim of the invention is to maintain low the overall size of the machining assembly and the complexity of the system.

The object of the invention is a machining assembly for processing a semi-finished product, said machining assembly comprising:
at least one shaft having a longitudinal axis, a first end or tool-holder end for supporting a machine tool, and a second end, opposite the first end along said longitudinal axis; a support head in which is formed at least one longitudinal housing for housing said a least one shaft; said at least one shaft being movable from a first non-operating position to a second operating position, and vice versa, along said longitudinal axis partially inside said longitudinal housing; a chamber of said longitudinal housing being designed to be fed pneumatically by means of a gas, in particular compressed gas, preferably compressed air, for acting on said second end of said at least one shaft for moving it from said non-operating position to said operating position, or vice versa; said at least one shaft having a first channel passing between said two ends, in order to put in fluid communication said chamber with a first hole formed in said tool-holder end, said machining assembly being configured in such a way that when said chamber is fed pneumatically, said at least one shaft passes from said first non-operating position to said second operating position, or vice versa, and said gas fluid flows out via said first hole of said tool-holder end, said at least one shaft also comprising, at the relative second end, a channel for connecting fluid between said through channel and said chamber in such a way as to allow the passage of said gas, when the chamber is fed pneumatically, from the chamber to the through channel of said at least one shaft.

In particular, according to the invention, at the second end of the at least one shaft there can be a piston body designed to move said at least one shaft and to slide in said chamber in an integral fashion with said at least one shaft, said piston body having a longitudinal hole, parallel to said longitudinal axis, not closed and designed for the passage of said gas, when the chamber is fed pneumatically, from the chamber to the first through channel of said at least one shaft, said machining assembly being configured in such a way that when said chamber is fed pneumatically, said gas acts on said piston body for moving said at least one shaft from said first non-operating position to said second operating position, and said gas passes from said chamber to said first through channel through said longitudinal hole of said piston body.

Alternatively, according to the invention, at the second end of the at least one shaft there can be a piston body designed to move said at least one shaft and to slide in said chamber in an integral fashion with said at least one shaft, at the second end of the at least one shaft a channel can be made in the body of the at least one shaft and designed for the passage of said gas, when the chamber is fed pneumatically, from the chamber to the through channel of said at least one shaft, said machining assembly being configured in such a way that when said chamber is fed pneumatically, said gas acts on said piston body for moving said at least one shaft from said second operating position to said first non-operating position, and said gas passes from said chamber to said through channel through said channel formed in the body of the at least one shaft.

In particular, according to the invention, said machining assembly can comprise a tool for processing said semi-finished product for removing material, said tool having at the two ends, along the relative longitudinal axis, respectively, a tip and a coupling head, said tool being removably coupled to the tool-holder end of said at least one shaft by means of said coupling head, said machining assembly being configured in such a way that when said tool is coupled to said at least shaft and when the chamber is fed pneumatically, the shaft passes from said first non-operating position to said second operating position, or vice versa, the tip of the tool is able to act on the semi-finished product for removing material, and said gas flowing out is able to evacuate the material removed.

In particular, according to the invention, said tool can comprise at least one through hole in the body of said tool from said tip to said coupling head, said tool being configured in such a way that when it is coupled to said shaft said through hole is in fluid communication with the first through channel of said shaft through said first hole formed in said tool-holder end in such a way that when the chamber is fed pneumatically, the shaft passes from said first non-operating position to said second operating position, or vice versa, the tip of the tool is able to act on the semi-finished product to remove material, and said gas flows from said through hole to evacuate the material removed.

Again, according to the invention, said at least one shaft can comprise one or more mini-channels in fluid communication with said first hole formed in the tool-holder end, and said machining assembly can configured in such a way that, during use, when a tool is coupled to the tool-holder end and the spindle shaft is in said second operating position, said fluid flows out from said one or more mini-channels.

Again, according to the invention, at the tool-holder end of the shaft there can be a housing for the coupling head of said tool.

Further, according to the invention, said housing can be in fluid communication with said first hole of said through channel formed in said tool-holder end.

Preferably, according to the invention, in said housing there can be an inner radial seat and a gasket, in particular an O-ring gasket, housed in said radial seat.

In particular, according to the invention, said tool can comprise a gasket at said coupling head.

Again, according to the invention, a portion of the first through channel of the shaft can have a smaller diameter than the diameter of the remaining portion of said through channel in order to calibrate the flow of the gas from the chamber to the first through channel.

Further, according to the invention, said smaller diameter portion of the first through channel can correspond to its end portion at the second end of the shaft.

Preferably, according to the invention, at the second end of the shaft there can be a screw pin which can be removably coupled to said second end of the shaft.

In particular, according to the invention, at the head of said screw pin there can be an outer seat and there can be a gasket in said outer seat, preferably the gasket being made of PTFE.

Again, according to the invention, said machining assembly can comprise at least two shafts, in particular at least two spindle shafts, which can be individually selected.

Moreover, according to the invention, said machining assembly can comprise a control and management device for individually controlling each shaft.

Further, according to the invention, said machining assembly can comprise at the tool-holder end of the shaft a tool-holder head for holding at least one tool.

Again, according to the invention, said tool-holder head can comprise a further hole and a further through channel, designed to place in fluid communication said first hole formed in said tool-holder end with said further hole formed in said tool-holder head, said machining assembly being configured in such a way that when said chamber is fed pneumatically, said at least one shaft moves from said first non-operating position to said second operating position, or vice versa, and said gas, flowing from said further hole, or in transit through it to subsequently flow from said machining assembly, is able to evacuate the removed material.

Again, according to the invention, said machining assembly can comprise a tool removably coupled to said tool-holder head and can be configured in such a way as to be positioned in said tool-holder head, with the relative longitudinal axis normal to said longitudinal axis of said at least one shaft.

Preferably, according to the invention, said machining assembly can comprise a pair of shafts positioned with the relative axes parallel to each other, and actuated in a substantially synchronous fashion when passing from said first non-operating position to said second operating position, or vice versa, and said tool-holder head can be fixed to each of said shafts, in such a way that when passing between said first non-operating position and second operating position, or vice versa, said tool-holder head performs a translational movement parallel to said longitudinal axis.

In particular, according to the invention, said machining assembly can comprise movement means comprising a shaft for transmission of the rotational motion, said tool-holder head can comprise means for transmission of said rotational motion from said movement means to said tool.

Further, according to the invention, said shaft for transmission of the rotational motion can be interposed between said pair of shafts, and in that said shaft for transmission of the rotational motion can comprise telescopic means in such a way as to be designed to transmit continuously a rotational motion by means of said transmission means when said shaft, pass, in a substantially synchronous fashion, from said first non-operating position to said second operating position, or vice versa.

Lastly, according to the invention, in said tool-holder head there can be a further channel which is able to place in fluid communication said through channels in two or more tools supported by said tool-holder head.

The invention is now described, by way of example and without limiting the scope of the invention, with reference to the accompanying drawings, in which:
Figure 1 shows a longitudinal cross section of a prior art machining assembly;
Figure 2 shows a longitudinal cross section of a first embodiment of the machining assembly according to the invention;
Figure 3 shows the detail III of Figure 2;
Figure 4 shows the detail IV of Figure 2;
Figure 5 shows a top view of the machining assembly according to the invention comprising a plurality of spindles;
Figure 6 shows a cross section through the plane VI of the machining assembly of Figure 5;

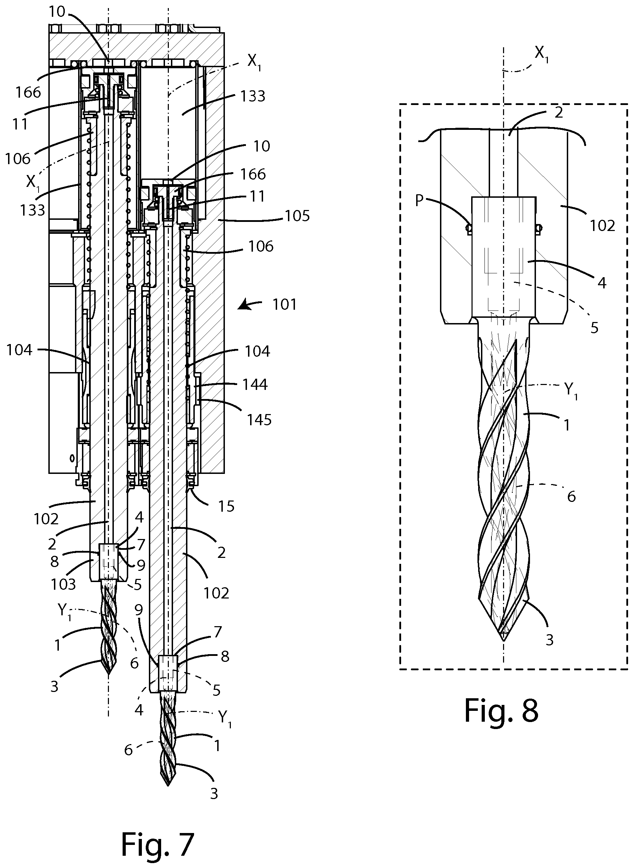

Figure 7 shows the detail VII of Figure 6;
Figure 8 shows the detail VIII of Figure 6;
Figure 9 shows a longitudinal cross section of the machining assembly of Figure 2 without tool;
Figure 10 shows a longitudinal cross section of a second embodiment of the machining assembly according to the invention;
Figure 11a - 11b show a longitudinal cross section of a third embodiment of the machining assembly according to the invention, in non-operating and operating positions, respectively;
Figure 12 shows a longitudinal cross section of a fourth embodiment of the machining assembly according to the invention, in a non-operating position;
Figure 13 shows a longitudinal cross section of the machining assembly of Figure 12, in an operating position; and
Figure 14 shows a longitudinal cross section of a fifth embodiment of the machining assembly according to the invention, in a non-operating position.

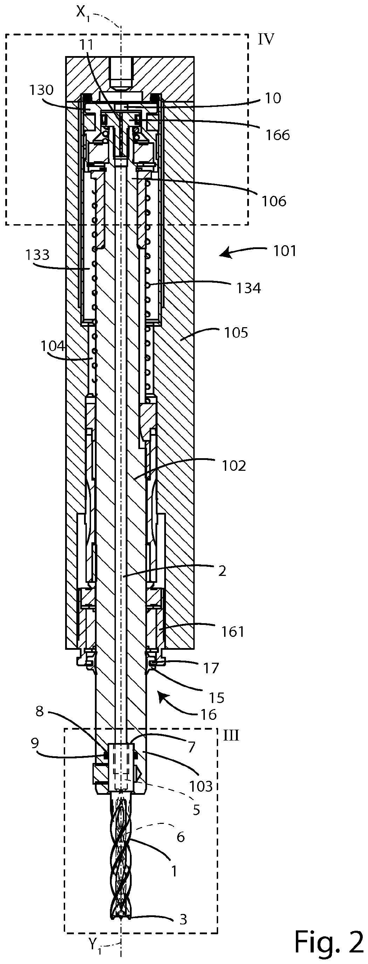

Figures 2 - 4 show the machining assembly according to the invention labelled 101 in a first embodiment.

The machining assembly 101 is configured for processing a semi-finished product, for example a panel made of wood or other materials, for removing material.

Said machining assembly 101 comprises a shaft 102, in the particular embodiment a spindle shaft 102, having a longitudinal axis X₁, a first end or tool-side end 103 for supporting a machining tool 1, and a second end 106, opposite to the first end 103 along said longitudinal axis X₁. In the particular embodiment, said tool-side end 103 is also called tool-holder end 103 as it directly supports a tool 1.

Moreover, said machining assembly 101 comprises a support head 105 in which is formed a longitudinal housing 104 for housing the respective spindle shaft 102.

Each spindle shaft 102 is movable from a first position, in particular a first non-operating position, to a second operating position, and vice versa, along said longitudinal axis X₁ partially inside said longitudinal housing 104. The processing of the semi-finished product for removing material can occur in the second operating position.

A portion or chamber 133 of said longitudinal housing 104 is designed to be fed pneumatically by means of a fluid, in particular a gas, in particular compressed gas, preferably compressed air, for acting on said second end 106 of said spindle shaft 102 for moving it from said first position to said second operating position, and vice versa.

Said spindle shaft 102 has a through channel 2 passing between said two ends 103, 106, in order to put in fluid communication said chamber 133 with a hole formed in said tool-holder end 103. Said machining assembly 101 is configured in such a way that when the chamber 133 is fed pneumatically, the spindle shaft 102 passes fro the first position to the operating position and the gas, and in particular the compressed gas in said chamber 133, flows out by means of said hole of said tool-holder end 103. According to other embodiments, the gas can flow out also or only when the spindle shaft 102 passes from the second operating position to the first non-operating position.

In particular, the tool 1 to be used with the machining assembly 101 according to the invention is designed for the processing of a semi-finished product for removing material, in particular swarf. The tool 1 has at the two ends, along the relative longitudinal axis Y₁, a tip 3 and a coupling head or shank 4. Said tool 1 can be removably coupled to the tool-holder end 103 of said spindle shaft 102 by means of said coupling head 4. Said machining assembly 101 is therefore configured in such a way that when said tool 1 is coupled to said spindle shaft 102 and when the chamber 133 is fed pneumatically, the spindle shaft 102 passes to said operating position, the tip 3 of the tool 1 is able to act on the semi-finished product for removing material, and said gas flowing out is able to evacuate the material removed.

Moreover, according to the embodiment shown in the drawings, for example in Figure 2, the tool 1 comprises a through hole 5, 6, in the relative body, fro said tip 3 to said coupling head 4. The tool 1 is configured in such a way that when it is coupled with said spindle shaft 102 said through hole 5, 6 is in fluid communication with the through channel 2 of said spindle shaft 102 at the hold formed in said tool-holder end 103 in such a way that when the chamber 133 is fed pneumatically, the spindle shaft 102 is in the operating position, the tip 3 of the tool 1 can act on the semi-finished product for removing material, in particular swarf, the compressed gas can also flow from said through hole 5, 6 for evacuating the material removed.

In other words, the compressed gas used for the selection of the spindle 102 to be used causing a movement to the operating position (ON position) holds the spindle 10 stationary in the operating position thanks to the pressure maintained in the chamber 133, guaranteeing the perforating thrust. Simultaneously, part of the compressed gas flows out from the channel 102, suitably calibrated, without generating an excessive pressure drop in the chamber 133 and/or in any case guaranteeing the required working pressure.

This advantageously allows for a single pneumatic user device both for the movement to the operating position of the spindle 102 and for the blowing of the compressed gas for removing swarf. The user device is therefore controlled simultaneously by the same spindle selection valve, and like the chamber 133 is pressurised, the spindle 102 passes to the operating position and simultaneously starts to blow air from the tip of the tool 1.

The invention therefore advantageously allows the pneumatic chamber already present in the machining assembly to be used, without the need to use further devices. This also allows the overall dimensions of the machining assembly to be reduced.

In particular, in the specific embodiment according to the invention, the through hole of the tool 1 can have a first central portion 5 at the coupling head 4 and a second portion with a smaller diameter or o mini-channel 6 at the tip 2 in fluid communication with said first portion 5. Several through holes can be provided in other embodiments.

Moreover, as can be seen from the drawings, at the tool-holder end 103 of the spindle shaft 102 there can be a housing 7 for the coupling head 4 of said tool 1.

When said tool 1 has a through hole, the through channel 2 of the spindle shaft 102 can be in fluid communication with said through hole at the housing 7. In other words, the hole formed in the tool-holder end 103 can be in fluid communication with said housing 7 and therefore in fluid communication with the through hole of said tool 1 allowing the passage of the compressed gas for the evacuation of the material removed by the tool 1.

In said housing 7 there can be an inner radial seat 8 and a gasket 9, in particular an O-ring gasket, housed in said radial seat 8. According to another embodiments, not illustrated, said gasket can be positioned directly on the coupling head 4 of the tool 1.

The presence of the gasket 9 advantageously avoids that the compressed gas which flows out from the through channel 2 to the through hole 5, 6 of the tool 1 flows out from the tool-holder end 103.

Again, according to the invention, at the second end 106 of the spindle shaft 102 there can be a piston body 130 designed to move the spindle shaft 102 and slide in said chamber 133, in an integral fashion with said at least one shaft 102. When the chamber 133 is fed pneumatically, said gas acts on said piston body 130, in particular on the relative upper portion, for moving said at least one shaft 102 from said first operating position to said first non-operating position.

Said piston body 130 has a longitudinal hole 10 not closed (unlike the prior art devices) which puts in fluid communication the chamber 133 with the through channel 2. When the chamber 133 is fed pneumatically, the longitudinal hole 10 formed in the piston body 130 allows the passage of the compressed gas from the chamber 133 to the through channel 2 of the spindle shaft 102.

Preferably, an end portion 11 of the through channel 2 of the spindle shaft 102, at the second end 106, can have a smaller diameter than the diameter of the remaining portion of said through channel 2 in order to calibrate the flow of the gas from the chamber 133 in the through channel 2. The calibration enables the pressure-flow rate ratio of compressed gas to be guaranteed when it flows out from the first end 103 of the spindle 102, maintaining a non-excessive pressure drop in the chamber 133. In fact, the pressure in the chamber 133 must guarantee an adequate thrust to the spindle 102 in the operating position, as a reaction thrust to the perforating.

According to other embodiments, this calibration zone, which comprises a portion with a diameter smaller than the rest of the through channel can be provided in other portions of the through channel itself.

According to the embodiment shown in the drawings, at the second end 106 of the spindle shaft 102 there is a screw pin 166 which can be removably coupled to said second end 106 of the spindle shaft 102, in particular inside the piston body 130. The end portion 11 of the through channel 2 is formed in said screw pin 166.

Moreover, according to the embodiment shown in the drawings, at the head of said screw pin 166 there can be an outer seat 12 on the diameter and there can be a gasket 13, located in said outer seat 12. Preferably, the gasket 13 can be made of PTFE.

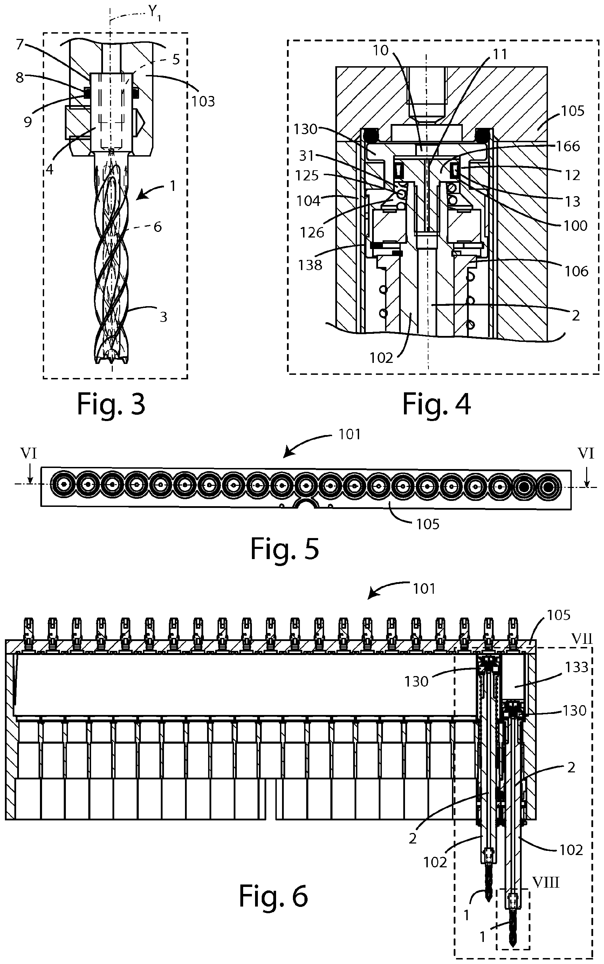

Up to now a machining assembly 101 has been described which comprises at least one spindle shaft 102; other embodiments can comprise several spindle shafts 102, as in the embodiment shown in Figures 5 and 6. In particular, when there are at least two spindle shafts 102 the machining assembly 101 can be configured in such a way as to select each independently from the other.

This allows different perforation layouts to be obtained and to therefore perform different processing operations, and at different times with each tool.

In that case, the machining assembly 101 can comprise a control and management device for individually controlling each spindle shaft 102.

The method for processing a semi-finished product by means of the machining assembly 101 according to the invention can comprise the following steps:
a) placing the semi-finished product at the tool 1 of at least one spindle shaft 102;
b) pneumatically feeding the chamber 133 with compressed gas at said spindle shaft 102;
c) moving the spindle shaft 102 from a first non-operating position to a second operating position along the longitudinal axis X₁,
d) acting on said semi-finished product for removing material by means of said tool 1 operated pneumatically by said compressed gas;
e) evacuating the material removed by means of the compressed gas fed pneumatically in said chamber 133.

Said steps c), d) and e) are carried out simultaneously following the same feeding of the compressed gas in the chamber 133 of step b).

The machining assembly is configured for selecting the spindles to be used for the perforating, generating the preferred perforating layout; an axis control or pneumatic machine will then preferably be used to move the entire machining assembly to perform the stroke which generates the hole or the holes on the semi-finished product according to the preselected layout by means of the selected spindles.

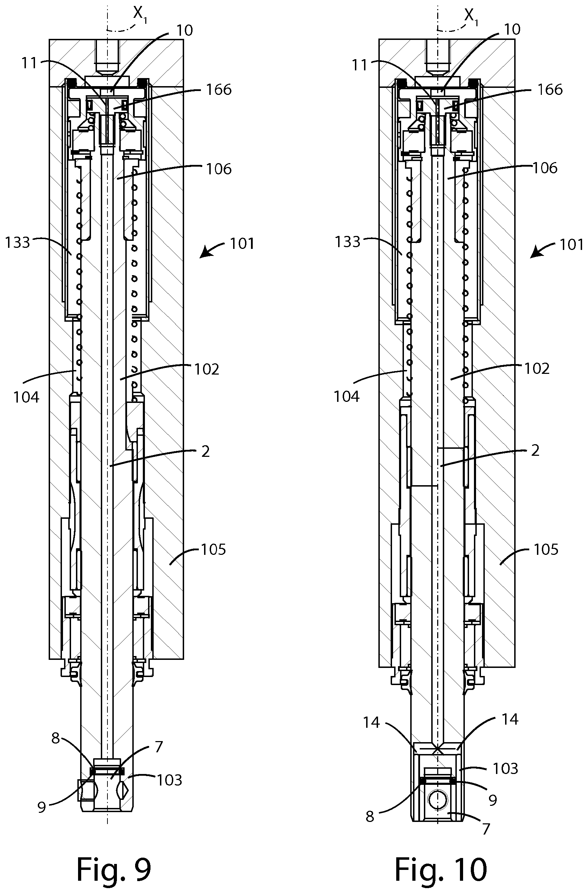

Figure 10 shows a further embodiment of the machining assembly 101 according to the invention. Said machining assembly 101 differs from the embodiment described above in that the through channel 2 is not in fluid communication with the housing 7 for the coupling head 4 of the tool 1.

Said spindle shaft 102 comprises one or more mini-channels 14, Figure 10 shows two, in fluid communication with the hole formed in the lower portion of the tool-holder end 103 and therefore in fluid communication with the through channel 2.

For this reason, when a normal not perforated is inserted in the housing 7 and the machining assembly is in the operating position, the compressed gas flows out from said one or more mini-channels 14 for evacuating the material removed by said tool 1.

A brief description is given below of the other secondary features of the machining assembly 101 according to the invention.

Preferably, the second end portion 106 can comprise shank means 126 positioned for being inserted in a snap-on fashion in a conical spring 125 mounted in a recess 31 defined by a wall 100 of the piston body 130 positioned for moving the spindle shaft 102.

The machining assembly 101 can also comprise a return spring 134 positioned for moving the spindle shaft 102 from the operating position to the non-operating position.

On the sleeve 144 a gear 145 can be made arranged to mesh with a similar gear of an adjacent spindle shaft 102.

In other words, the gears 145 of the spindle shafts 102 are mounted in cascade.

In the machining assembly 101 there can also be a seal device 16, the seal device 16 being interposed between the spindle shaft 102 and the support sleeve 161.

The seal device 16 can comprise a first body 15 which makes contact with the spindle shaft 102 and is connected in a rotatable fashion, with clearance, and a second body 17 which can be connected in a rotatable fashion to said first body 15 and can be fixed, or made, in said support sleeve 161 in such a way as to block said first body 15 along the operational longitudinal axis X₁ during movement of said first element 15 along said longitudinal axis X₁.

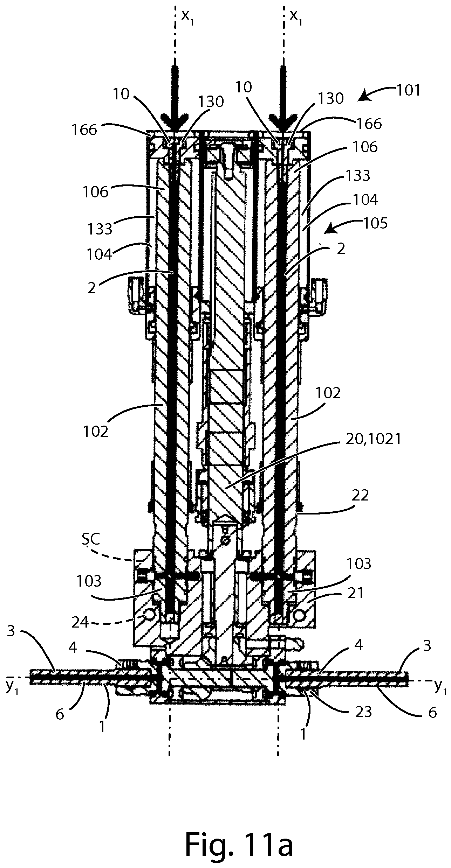

Figures 11a - 11b show a third embodiment of the machining assembly 101 according to the invention. The same numerical references will be used for the equivalent elements which perform the same function and which are considered to be already described above. The drawings also show, with a darker colour and indicated with arrows, the passage of the gas through the conduits in fluid communication with each other.

According to the third embodiment there are a pair of shafts 102 which are substantially equal and positioned with the relative longitudinal axes X₁ parallel, and actuated in a substantially synchronous fashion when passing from said first non-operating position to said second operating position. It is evident that according to other embodiments said machining assembly 103 can have a smaller of greater number of shafts 102.

At the tool-holder end 103 of both the shafts 102 is fixed a tool-holder head 21, which comprises at least one tool 1, positioned in a removable fashion in said tool-holder head 21, for the processing of said semi-finished product for the removal of material. Two tools 1 are provided in the particular embodiment shown in the drawings.

In particular, said tool-holder head 21 is fixed to each of said shafts 102, in such a way that when said shafts 102 pass between said first non-operating position and second operating position, there is a translation motion for said tool-holder head 21, parallel to each of said axes X₁ (as shown in the transition from Figure 11a to Figure 11b).

Preferably, as shown in the drawings, the tool 1 is positioned removably, in said tool-holder head 21, with the relative longitudinal axis Y₁ normal to said longitudinal axis X1 of the respective shaft 102.

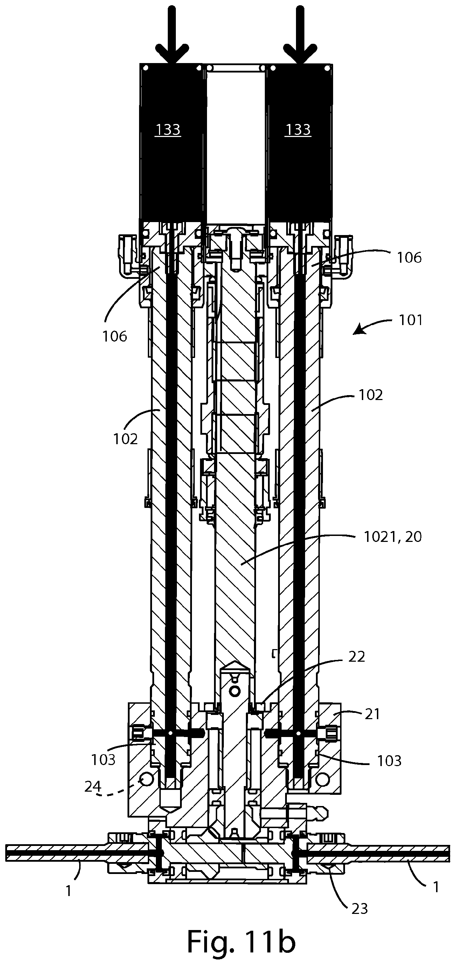

In particular, the machining assembly 101 comprises movement means 20, having a relative shaft for transmission of rotational motion 1021, which is able to transmit the motion to means for transmission of the motion 22, 23 to said tool 1. In the particular embodiment shown in Figures 11 a - 11b wherein the machining assembly 101 two shafts 102 said shaft for transmission of the rotational motion 1021 is interposed between said pair of shafts 102.

More specifically, said tool-holder head 21 comprises a first element 22 designed to receive the motion from the movement means 20, and a second element 23 designed to impart the motion to said tool 1.

More in detail, said first element 22 of said tool-holder head 21 receives a first rotational motion from the tool-holder end of said shaft for the transmission of the rotational motion 1021, and said second element 23 of said tool-holder head 21 imparts a second rotational motion to said tool 1. Moreover, said shaft for transmission of the rotational motion 1021 can comprise a part with a substantially telescopic operation designed to continuously transmit a rotational motion from an assigned section of it, at least up to said first element 22 of said tool-holder head 21, so that the two shafts 102 pass, in a substantially synchronous fashion, from said first operating position to said first non-operating position.

Again, according to the invention, said tool-holder head 21 comprises a further hole 24 and a further through channel, designed to place in fluid communication said first hole formed in said tool-holder end 103 with said further hole 24 formed in said tool-holder head 21. Said machining assembly 101 is configured in such a way that when said chamber 133 is fed pneumatically, said at least one shaft 102 moves from said first non-operating position to said second operating position, and said gas, in particular compressed air, flowing from said further hole 24, or in transit through it to subsequently flow from said machining assembly 101, is able to evacuate the removed material.

In particular, each tool 1, coupled in a removable fashion to said tool-holder head 21, has, at the two ends along the relative longitudinal axis Yi, respectively, a tip 3, and a coupling head 4 for the removable coupling of it to said second element 23 of said tool-holder head 21. Said machining assembly 101 is therefore configured in such a way that when said tool 1 is coupled to said second element 23 and when said chamber 133 is fed pneumatically, said shaft 102 passes from said first non-operating position to said second operating position, said tip 3 of the tool 1 being able to act on the semi-finished product for removing material, and said gas flowing from said second hole 24 is able to evacuate the material removed.

As in the embodiments described previously, said tool 1 can also comprise a through hole or channel 6, extending in the body of said tool 1, substantially from said tip 3 to said coupling head 4. Said tool 1 is configured in such a way that when it is coupled to said second element 23 of said tool-holder head 21, said third channel 6 puts in fluid communication with the atmosphere said second hole 24 formed in said tool-holder head 21, in such a way that when said chamber 133 is fed pneumatically, said at least one shaft 102 passes from said first non-operating position to said second operating position, and the tip 3 of the tool 1 is able to act on the semi-finished product for the removal of material, said gas flowing finally from said machining assembly 101 through said through hole 6, for evacuating the material removed.

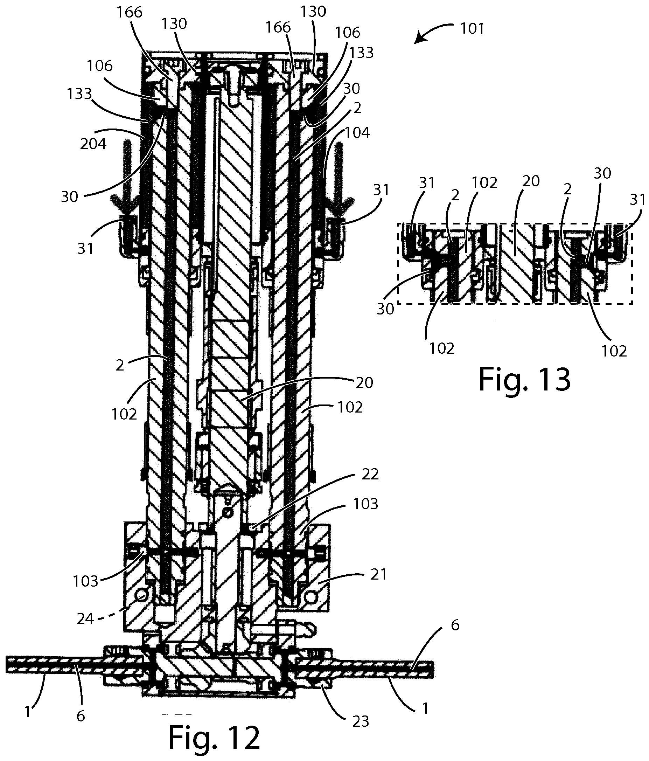

Figures 12 and 13 show a fourth embodiment of the machining assembly 101 according to the invention, which differs from the embodiment of Figures 11a - 11b in that at the second end 106 of the at least one shaft 102 there is a piston body 130, designed to move said at least one shaft 102 and to slide in said chamber 133 in an integral fashion with said at least one shaft 102, which does not have a channel made in the body. Said piston body 130 is in fact sealed and does not put in fluid communication the chamber 133 with the through channel 2.

Otherwise, at said second end 106 of the at least one shaft 102, in particular of each shaft 102, is formed a channel 30 in the body of the at least one shaft 102 and designed for the passage of said gas, when the chamber 133 is fed pneumatically, fro the chamber 133 to the through channel 2 of said at least one shaft 102 forming a direct fluid connection channel.

Said machining assembly 101 is therefore configured in such a way that when said chamber 133 is fed pneumatically, said gas acts on said piston body 130, in particular from the relative lower portion, for moving said at least one shaft 102 from said second operating position (shown in Figure 13) to said first non-operating position (shown in Figure 12), and said gas passes from said chamber 133 to said through channel 2 through said channel 30 formed in the body of the at least one shaft 102. As shown in particular in Figure 13, the machining assembly 101 has a second inlet 31 of the gas formed at a lower side of the chamber 133, in such a way that when the shaft is in the operating position, the gas is fed pneumatically through said second inlet 31 which acts from below, on the lower portion of the piston body 130 to pass the shaft to the first non-operating position. Moreover, said second inlet 31 is positioned in such a way as to be substantially at the same height as said channel 30 formed in the body of the at least one shaft 102, when the compressed gas is fed from said second inlet 31 when the shaft is in the operating position.

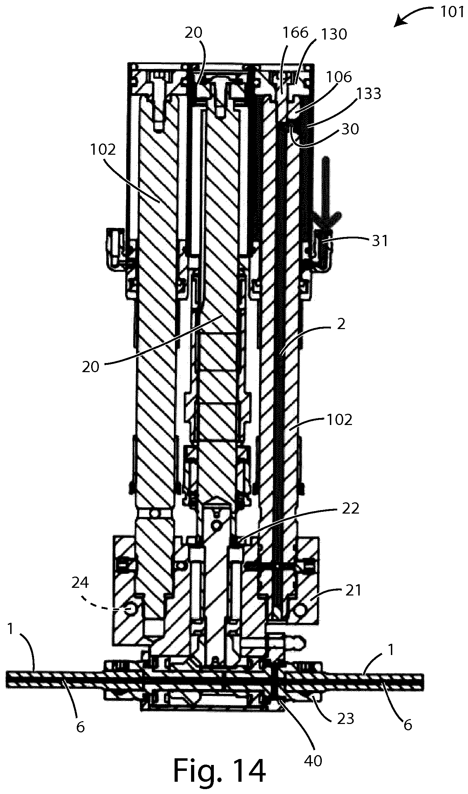

The embodiment of the machining assembly 101 according to Figure 14 operates in a similar manner to the machining assembly 101 of Figure 12 - 13, however only one shaft 102 has the through channel 2, whilst in the tool-holder head 21 is formed a further channel 40 which is able to put in fluid connection said through channels 6 in said two tools 1, in such a way that the compressed gas passing through the through channel 2 of a shaft 102 flows out from both the tools 1 simultaneously, using a single compressed gas inlet 31.

## Claims

1. A machining assembly (101) for processing a semi-finished product, said machining assembly (101) comprising:
at least one shaft (102) having a longitudinal axis (X1), a first end or tool-holder end (103) for supporting a machining tool (1), and a second end (106), opposite to the first end (103) along said longitudinal axis (X1);
a support head (105) in which is formed at least one longitudinal housing (104) for housing said at least one shaft (102);
said at least one shaft (102) being movable from a first non-operating position to a second operating position, and vice versa, along said longitudinal axis (X1) partially inside said longitudinal housing (104);
a chamber (133) of said longitudinal housing (104) being designed to be powered pneumatically by means of a gas, in particular compressed gas, preferably compressed air, for acting on said second end (106) of said at least one shaft (102) for moving it from said non-operating position to said operating position, or vice versa;
said at least one shaft (102) having a first through channel (2) passing between said two ends (103, 106), in order to put in fluid communication said chamber (133) with a first hole formed in said tool-holder end (103),
said machining assembly (101) being configured so that when said chamber (133) is fed pneumatically, said at least one shaft (102) passes from said first non-operating position to said second operating position, or vice versa, and said fluid flows out via said hole of said tool-holder end (103);
**characterized in that** said at least one shaft (102) further comprising, at the relative second end (106), a channel (10, 30) for connecting fluid between said first through channel (2) and said chamber (133) in such a way as to allow the passage of said gas, when the chamber (133) if fed pneumatically, from the chamber (133) to the first through channel (2) of said at least one shaft (102).

2. The machining assembly (101) according to the preceding claim, **characterised in that** at the second end (106) of the at least one shaft (102) there is a piston body (130) designed to move said at least one shaft (102) and to slide in said chamber (133) in an integral fashion with said at least one shaft (102), said piston body (130) having a longitudinal hole (10), parallel to said longitudinal axis (X₁), not closed and designed for the passage of said gas, when the chamber (133) is fed pneumatically, from the chamber (133) to the first through channel (2) of said at least one shaft (102), said machining assembly (101) being configured in such a way that when said chamber (133) is fed pneumatically, said gas acts on said piston body (130) for moving said at least one shaft (102) from said first non-operating position to said second operating position, and said gas passes from said chamber (133) to said first through channel (2) through said longitudinal hole (10) of said piston body (130).

3. The machining assembly (101) according to claim 1, **characterised in that** at the second end (106) of the at least one shaft (102) there is a piston body (130) designed to move said at least one shaft (102) and to slide in said chamber (133) in an integral fashion with said at least one shaft (102), **in that** at the second end (106) of the at least one shaft (102) a channel (30) is formed in the body of the at least one shaft (102) and designed for the passage of said gas, when the chamber (133) is fed pneumatically, from the chamber (133) to the through channel (2) of said at least one shaft (102), said machining assembly (101) being configured in such a way that when said chamber (133) is fed pneumatically, said gas acts on said piston body (130) for moving said at least one shaft (102) from said second operating position to said first non-operating position, and said gas passes from said chamber (133) to said through channel (2) through said channel (30) formed in the body of the at least one shaft (102).

4. The machining assembly (101) according to any one of the preceding claims, **characterised in that** it comprises a tool (1) for processing said semi-finished product for removing material, said tool (1) having at the two ends, along the relative longitudinal axis (Yi), respectively, a tip (3) and a coupling head (4), said tool (1) being removably coupled to the tool-holder end (103) of said at least one shaft (102) by means of said coupling head (4), said machining assembly (101) being configured in such a way that when said tool (1) is coupled to said shaft (102) and when the chamber (133) is fed pneumatically, the shaft (102) passes from said first non-operating position to said second operating position, or vice versa, the tip (3) of the tool (1) is able to act on the semi-finished product for removing material, and said gas flowing out is able to evacuate the material removed.

5. The machining assembly (101) according to the preceding claim, **characterised in that** said tool (1) comprises at least one through hole (5, 6) in the body of said tool (1) from said tip (3) to said coupling head (4), said tool (1) being configured in such a way that when it is coupled to said shaft (102) said through hole (5, 6) is in fluid communication with the first through channel (2) of said shaft (102) through said first hole formed in said tool-holder end (103) in such a way that when the chamber (133) is fed pneumatically, the shaft (102) passes from said first non-operating position to said second operating position, or vice versa, the tip (3) of the tool (1) is able to act on the semi-finished product to remove material, and said gas flows from said through hole (5, 6) to evacuate the material removed.

6. The machining assembly (101) according to any one of claims 1 to 4, **characterised in that** said at least one shaft (102) comprises one or more mini-channels (14) in fluid communication with said first hole formed in the tool-holder end (103), in being configured so that, during use, when a tool is coupled to the tool-holder end (103) and the shaft (102) is in said second operating position, said fluid flows out from said one or more mini-channels (14).

7. The machining assembly (101) according to any one of the previous claims, **characterised in that** at the tool-holder end (103) of the shaft (102) there is a housing (7) for the coupling head (4) of said tool (1).

8. The machining assembly (101) according to claims 5 and 7, **characterised in that** said housing (7) is in fluid communication with said first hole of said through channel (2) formed in said tool-holder end (103).

9. The machining assembly (101) according to claim 7 or 8, **characterised in that** in said housing (7) there is an inner radial seat (8) and a gasket (9), in particular an O-ring gasket, housed in said radial seat (8).

10. The machining assembly (101) according to claim 4, **characterised in that** said tool comprises a gasket at said coupling head (4).

11. The machining assembly (101) according to any one of the preceding claims, **characterised in that** a portion (11) of the first through channel (2) of the shaft (102) has a smaller diameter than the diameter of the remaining portion of said through channel (2) in order to calibrate the flow of the fluid from the chamber (133) to the first through channel (2).

12. The machining assembly (101) according to the previous claim, **characterised in that** said smaller diameter portion of the first through channel (2) corresponds to its end portion (11) at the second end (106) of the shaft (102).

13. The machining assembly (101) according to any one of the preceding claims, **characterised in that** at the second end (106) of the shaft (102) there is a screw pin (166) which can be removably coupled to said second end (106) of the shaft (102).

14. The machining assembly (101) according to the previous claim, **characterised in that** at the head of said screw pin (166) there is an outer seat (12) and **in that** there is a gasket (13) in said outer seat (12), preferably the gasket (13) being made of PTFE.

15. The machining assembly (101) according to any one of the preceding claims, **characterised in that** it comprises at least two shafts (102), in particular at least two spindle shafts (102), which can be individually selected.

16. The machining assembly (101) according to the previous claim, **characterised in that** it comprises a control and management device for individually controlling each shaft (102).

17. The machining assembly (101) according to any one of claims 1 - 6 and 10 - 16, **characterised in that** at the tool-holder end (103) of the shaft (102) there is a tool-holder head (21) for holding at least one tool (1).

18. The machining assembly (101) according to the preceding claim, **characterised in that** said tool-holder head (21) comprises a further hole (24) and a further through channel, designed to place in fluid communication said first hole formed in said tool-holder end (103) with said further hole (24) formed in said tool-holder head (21), said machining assembly (101) being configured in such a way that when said chamber (133) is fed pneumatically, said at least one shaft (102) moves from said first non-operating position to said second operating position, or vice versa, and said gas, flowing from said further hole (24), or in transit through it to subsequently flow from said machining assembly (101), is able to evacuate the removed material.

19. The machining assembly (101) according to claim 17 or 18, **characterised in that** it comprises a tool (1) removably coupled to said tool-holder head (21) and **in that** it is configured in such a way as to be positioned in said tool-holder head (21), with the relative longitudinal axis (Y₁) normal to said longitudinal axis (X₁) of said at least one shaft (102).

20. The machining assembly (101) according to any one of claims 17 - 19, **characterised in that** it comprises a pair of shafts (102) positioned with the relative axes (X₁) parallel to each other, and actuated in a substantially synchronous fashion when passing from said first non-operating position to said second operating position, or vice versa, and **in that** said tool-holder head (21) is fixed to each of said shafts (102), in such a way that when passing between said first non-operating position and second operating position, or vice versa, said tool-holder head (21) performs a translational movement parallel to said longitudinal axis (X₁).

21. The machining assembly (101) according to any one of claims 17 - 20, **characterised in that** it comprises movement means (20) comprising a shaft for transmission of the rotational motion (1021), **in that** said tool-holder head (21) comprises means (22, 23) for transmission of said rotational motion from said movement means (20) to said tool (1).

22. The machining assembly (101) according to claims 20 and 21, **characterised in that** said shaft for transmission of the rotational motion (1021) is interposed between said pair of shafts (102), and **in that** said shaft for transmission of the rotational motion (1021) comprises telescopic means in such a way as to be designed to transmit continuously a rotational motion by means of said transmission means (22, 23) when said shaft (102), pass, in a substantially synchronous fashion, from said first non-operating position to said second operating position, or vice versa.

23. The machining assembly (101) according to any one of claims 20 - 22, **characterised in that** in said tool-holder head (21) there is a further channel (40) which is able to place in fluid communication said through channels (6) in two or more tools (1) supported by said tool-holder head (21).

## Patentansprüche

1. Bearbeitungseinheit (101) zur Bearbeitung eines halbfertigen Produktes, wobei die Bearbeitungseinheit (101) umfasst:
zumindest eine Welle (102), aufweisend eine Längsachse (X1), ein erstes Ende oder Werkzeughalterende (103) zum Halten eines Bearbeitungswerkzeuges (1) und ein zweites Ende (106), das dem ersten Ende (103) entlang der Längsachse (X1) gegenüberliegt;
einen Trägerkopf (105), in dem zumindest ein längliches Gehäuse (104) zur Aufnehme der zumindest einen Welle (102) ausgebildet ist;
wobei die zumindest eine Welle (102) entlang der Längsachse (X1) und teilweise innerhalb des länglichen Gehäuses (104) beweglich ist zwischen einer ersten Außerbetriebsstellung und einer zweiten Betriebsstellung und umgekehrt;
wobei eine Kammer (133) des länglichen Gehäuses (104) dafür ausgelegt ist, pneumatisch mit einem Gas, insbesondere Druckgas, vorzugsweise Druckluft, gespeist zu werden, damit dieses auf das zweite Ende (106) der zumindest einen Welle (102) einwirkt, um sie von der Außerbetriebsstellung in die Betriebsstellung zu bewegen, oder umgekehrt;
wobei die zumindest eine Welle (102) einen ersten Durchgangskanal (2) aufweist, der zwischen den zwei Enden (103, 106) verläuft, um die Kammer (133) in Fluidverbindung mit einem ersten Loch zu setzen, das in dem Werkzeughalterende (103) ausgebildet ist,
wobei die Bearbeitungseinheit (101) derart konfiguriert ist, dass, wenn die Kammer (133) pneumatisch gespeist wird, die zumindest eine Welle (102) aus der ersten Außerbetriebsstellung in die zweite Betriebsstellung wechselt, oder umgekehrt, und das Fluid über das Loch des Werkzeughalterendes (103) ausströmt;
**dadurch gekennzeichnet, dass**
die zumindest eine Welle (102) ferner, an dem entsprechenden zweiten Ende (106), einen Kanal (10, 30) umfasst, um eine Fluidverbindung zwischen dem ersten Durchgangskanal (2) und der Kammer (133) herzustellen, um, wenn die Kammer (133) pneumatisch gespeist wird, den Durchgang des Gases von der Kammer (133) zu dem ersten Durchgangskanal (2) der zumindest einen Welle (102) zu ermöglichen.

2. Bearbeitungseinheit (101) nach dem vorhergehenden Anspruch, **dadurch gekennzeichnet, dass** an dem zweiten Ende (106) der zumindest einen Welle (102) ein Kolbenkörper (130) vorgesehen ist, der dafür ausgelegt ist, die zumindest eine Welle (102) zu bewegen und in der Kammer (133) in integraler Weise mit der zumindest einen Welle (102) zu gleiten, wobei der Kolbenkörper (130) ein Längsloch (10) aufweist, das parallel zu der Längsachse (X1) ist, das nicht verschlossen und das dafür vorgesehen ist, den Durchgang des Gases von der Kammer (133) zu dem ersten Durchgangskanal (2) der zumindest einen Welle (102) zu ermöglichen, wenn die Kammer (133) pneumatisch gespeist wird, wobei die Bearbeitungseinheit (101) so konfiguriert ist, dass, wenn die Kammer (133) pneumatisch gespeist wird, das Gas auf den Kolbenkörper (130) wirkt, um die zumindest eine Welle (102) aus der ersten Außerbetriebsstellung in die zweite Betriebsstellung zu bewegen, und das Gas von der Kammer (133) durch das Längsloch (10) des Kolbenkörpers (130) in den ersten Durchgangskanal (2) strömt.

3. Bearbeitungseinheit (101) nach Anspruch 1, **dadurch gekennzeichnet, dass** an dem zweiten Ende (106) der zumindest einen Welle (102) ein Kolbenkörper (130) vorgesehen ist, der dafür ausgelegt ist, die zumindest eine Welle (102) zu bewegen und in der Kammer (133) in integraler Weise mit der zumindest einen Welle (102) zu gleiten, und dadurch, dass an dem zweiten Ende (106) der zumindest einen Welle (102) ein Kanal (30) in dem Körper der zumindest einen Welle (102) ausgebildet und dafür vorgesehen ist, den Durchgang des Gases von der Kammer (133) zu dem ersten Durchgangskanal (2) der zumindest einen Welle (102) zu ermöglichen, wenn die Kammer (133) pneumatisch gespeist wird, wobei die Bearbeitungseinheit (101) so konfiguriert ist, dass, wenn die Kammer (133) pneumatisch gespeist wird, das Gas auf den Kolbenkörper (130) wirkt, um die zumindest eine Welle (102) aus der zweiten Betriebsstellung in die erste Außerbetriebsstellung zu bewegen, und das Gas von der Kammer (133) durch den in dem Körper der zumindest einen Welle (102) ausgebildeten Kanal (30) in den Durchgangskanal (2) strömt.

4. Bearbeitungseinheit (101) nach einem der vorhergehenden Ansprüche, **dadurch gekennzeichnet, dass** sie ein Werkzeug (1) zur Bearbeitung des halbfertigen Produktes durch Materialabtragung umfasst, wobei das Werkzeug (1) an seinen zwei Enden, entlang seiner Längsachse (Y1) betrachtet, jeweils eine Spitze (3) beziehungsweise einen Kupplungskopf (4) aufweist, wobei das Werkzeug (1) mittels genanntem Kupplungskopf (4) abnehmbar an das Werkzeughalterende (103) der zumindest einen Welle (102) gekoppelt wird, wobei die Bearbeitungseinheit (101) so konfiguriert ist, dass, wenn das Werkzeug (1) an die Welle (102) gekoppelt ist und wenn die Kammer (133) pneumatisch gespeist wird, die Welle (102) von der ersten Außerbetriebsstellung in die zweite Betriebsstellung wechselt oder umgekehrt, die Spitze (3) des Werkzeugs (1) auf das halbfertige Produkt einwirken kann, um Material davon abzutragen, und das ausströmende Gas das abgenommene Material austragen kann.

5. Bearbeitungseinheit (101) nach dem vorhergehenden Anspruch, **dadurch gekennzeichnet, dass** das Werkzeug (1) zumindest ein Durchgangsloch (5, 6) in dem Körper des Werkzeugs (1) umfasst, das sich von der Spitze (3) zu dem Kupplungskopf (4) erstreckt, wobei das Werkzeug (1) so konfiguriert ist, dass, wenn es an die Welle (102) gekoppelt ist, das Durchgangsloch (5, 6) über das im Werkzeughalterende (103) ausgebildete erste Loch in Fluidverbindung mit dem ersten Durchgangskanal (2) der Welle (102) steht, so dass, wenn die Kammer (133) pneumatisch gespeist wird, die Welle (102) von der ersten Außerbetriebsstellung in die zweite Betriebsstellung wechselt oder umgekehrt, die Spitze (3) des Werkzeugs (1) auf das halbfertige Produkt einwirken kann, um Material davon abzutragen, und das Gas aus dem Durchgangsloch (5, 6) strömt, um das abgenommene Material auszutragen.

6. Bearbeitungseinheit (101) nach einem der Ansprüche von 1 bis 4, **dadurch gekennzeichnet, dass** die zumindest eine Welle (102) einen oder mehrere Minikanäle (14) umfasst, die in Fluidverbindung mit dem im Werkzeughalterende (103) ausgebildeten ersten Loch stehen, und derart konfiguriert, dass, wenn ein Werkzeug an das Werkzeughalterende (103) gekoppelt ist und die Welle (102) sich in der zweiten Betriebsstellung befindet, das Fluid aus dem einen oder den mehreren Minikanälen (14) strömt.

7. Bearbeitungseinheit (101) nach einem der vorhergehenden Ansprüche, **dadurch gekennzeichnet, dass** sich an dem Werkzeughalterende (103) der Welle (102) ein Gehäuse (7) für den Kupplungskopf (4) des Werkzeugs (1) befindet.

8. Bearbeitungseinheit (101) nach den Ansprüchen 5 und 7, **dadurch gekennzeichnet, dass** das Gehäuse (7) in Fluidverbindung mit dem ersten Loch des Durchgangskanals (2) steht, das im Werkzeughalterende (103) ausgebildet ist.

9. Bearbeitungseinheit (101) nach Anspruch 7 oder 8, **dadurch gekennzeichnet, dass** das Gehäuse (7) einen inneren radialen Sitz (8) und eine Dichtung (9) aufweist, insbesondere einen 0-Ring, der in dem radialen Sitz (8) untergebracht ist.

10. Bearbeitungseinheit (101) nach Anspruch 4, **dadurch gekennzeichnet, dass** das Werkzeug eine Dichtung an dem Kupplungskopf (4) umfasst.

11. Bearbeitungseinheit (101) nach einem der vorhergehenden Ansprüche, **dadurch gekennzeichnet, dass** ein Abschnitt (11) des ersten Durchgangskanals (2) der Welle (102) einen Durchmesser aufweist, der kleiner ist als der Durchmesser des verbleibenden Abschnitts des Durchgangskanals (2), um den Durchfluss des Fluides aus der Kammer (133) in den ersten Durchgangskanal (2) zu kalibrieren.

12. Bearbeitungseinheit (101) nach dem vorhergehenden Anspruch, **dadurch gekennzeichnet, dass** der Abschnitt des ersten Durchgangskanals (2) mit kleinerem Durchmesser seinem Endabschnitt (11) an dem zweiten Ende (106) der Welle (102) entspricht.

13. Bearbeitungseinheit (101) nach einem der vorhergehenden Ansprüche, **dadurch gekennzeichnet, dass** an dem zweiten Ende (106) der Welle (102) ein Schraubstift (166) vorhanden ist, der abnehmbar mit dem zweiten Ende (106) der Welle (102) koppelbar ist.

14. Bearbeitungseinheit (101) nach dem vorhergehenden Anspruch, **dadurch gekennzeichnet, dass** der Kopf des Schraubstifts (166) einen äußeren Sitz (12) aufweist, und dadurch, dass eine Dichtung (13) in dem äußeren Sitz (12) vorhanden ist, wobei die Dichtung (13) vorzugsweise aus PTFE besteht.

15. Bearbeitungseinheit (101) nach einem der vorhergehenden Ansprüche, **dadurch gekennzeichnet, dass** sie zumindest zwei Wellen (102) umfasst, insbesondere zumindest zwei Spindelwellen (102), die einzeln auswählbar sind.

16. Bearbeitungseinheit (101) nach dem vorhergehenden Anspruch, **dadurch gekennzeichnet, dass** sie eine Steuer- und Verwaltungseinrichtung zur individuellen Steuerung jeder Welle (102) umfasst.

17. Bearbeitungseinheit (101) nach einem der Ansprüche von 1 bis 6 und von 10 bis 16, **dadurch gekennzeichnet, dass** sich an dem Werkzeughalterende (103) der Welle (102) ein Werkzeughalterkopf (21) zum Halten von zumindest einem Werkzeug (1) befindet.

18. Bearbeitungseinheit (101) nach dem vorhergehenden Anspruch, **dadurch gekennzeichnet, dass** der Werkzeughalterkopf (21) ein weiteres Loch (24) und einen weiteren Durchgangskanal umfasst, der dafür ausgelegt ist, das im Werkzeughalterende (103) ausgebildete erste Loch in Fluidverbindung mit dem weiteren Loch (24) zu setzen, das im Werkzeughalterkopf (21) ausgebildet ist, wobei die Bearbeitungseinheit (101) so konfiguriert ist, dass, wenn die Kammer (133) pneumatisch gespeist wird, die zumindest eine Welle (102) sich von der ersten Au ßerbetriebsstellung in die zweite Betriebsstellung bewegt oder umgekehrt, und das Gas, das aus dem weiteren Loch strömt (24), oder durch dieses strömt, um nachfolgend aus der Bearbeitungseinheit (101) zu strömen, in der Lage ist, das abgenommene Material auszutragen.

19. Bearbeitungseinheit (101) nach Anspruch 17 oder 18, **dadurch gekennzeichnet, dass** sie ein Werkzeug (1) umfasst, das abnehmbar an den Werkzeughalterkopf (21) gekoppelt ist, und dadurch, dass sie dafür konfiguriert ist, in dem Werkzeughalterkopf (21) so positioniert zu werden, dass die entsprechende Längsachse (Y1) in Normalenrichtung zu der Längsachse (X1) der zumindest einen Welle (102) ausgerichtet ist.

20. Bearbeitungseinheit (101) nach einem der Ansprüche von 17 bis 19, **dadurch gekennzeichnet, dass** sie ein Paar Wellen (102) umfasst, die mit ihren entsprechenden Achsen (X1) parallel zueinander angeordnet sind, und die, beim Wechsel von der ersten Außerbetriebsstellung in die zweite Betriebsstellung oder umgekehrt, in einer im Wesentlichen synchronen Weise aktiviert werden, und dadurch, dass der Werkzeughalterkopf (21) an jeder der Wellen (102) derart befestigt ist, dass, beim Wechsel von der ersten Außerbetriebsstellung in die zweite Betriebsstellung oder umgekehrt, der Werkzeughalterkopf (21) eine Translationsbewegung parallel zu der Längsachse (X1) ausführt.

21. Bearbeitungseinheit (101) nach einem der Ansprüche von 17 bis 20, **dadurch gekennzeichnet, dass** sie Bewegungsmittel (20) umfasst, die eine Welle zur Übertragung der Drehbewegung (1021) umfassen, und dadurch, dass der Werkzeughalterkopf (21) Mittel (22, 23) zur Übertragung der Drehbewegung von den Bewegungsmitteln (20) auf das Werkzeug (1) umfasst.

22. Bearbeitungseinheit (101) nach den Ansprüchen 20 und 21, **dadurch gekennzeichnet, dass** die Welle zur Übertragung der Drehbewegung (1021) zwischen dem Paar Wellen (102) angeordnet ist, und dadurch, dass die Welle zur Übertragung der Drehbewegung (1021) teleskopische Mittel umfasst, so dass sie dafür ausgelegt ist, kontinuierlich eine Drehbewegung mittels der Übertragungsmittel (22, 23) zu übertragen, wenn die Welle (102), in einer im Wesentlichen synchronen Weise, von der ersten Außerbetriebsstellung in die zweite Betriebsstellung wechselt oder umgekehrt.

23. Bearbeitungseinheit (101) nach einem der Ansprüche von 20 bis 22, **dadurch gekennzeichnet, dass** der Werkzeughalterkopf (21) einen weiteren Kanal (40) aufweist, der in der Lage ist, die Durchgangskanäle (6) in zwei oder mehreren Werkzeugen (1), die vom Werkzeughalterkopf (21) getragen werden, in Fluidverbindung zu setzen.

## Revendications

1. Un ensemble d'usinage (101) pour traiter un produit semi-fini, ledit ensemble d'usinage (101) comprenant :
au moins un arbre (102) ayant un axe longitudinal (X1), une première extrémité ou extrémité porte-outil (103) pour supporter un outil d'usinage (1), et une deuxième extrémité (106), opposée à la première extrémité (103) le long dudit axe longitudinal (X1) ;
une tête de support (105) dans laquelle est formé au moins un logement longitudinal (104) pour loger ledit au moins un arbre (102) ;
ledit au moins un arbre (102) étant mobile d'une première position non opérationnelle à une deuxième position opérationnelle, et inversement, le long dudit axe longitudinal (X1) partiellement à l'intérieur dudit logement longitudinal (104) ;
une chambre (133) dudit logement longitudinal (104) étant destinée à être alimentée pneumatiquement au moyen d'un gaz, en particulier gaz comprimé, de préférence air comprimé, pour agir sur ladite deuxième extrémité (106) dudit au moins un arbre (102) pour le déplacer de ladite position non opérationnelle à ladite position opérationnelle, ou inversement ;
ledit au moins un arbre (102) ayant un premier canal traversant (2) passant entre lesdites deux extrémités (103, 106), de manière à mettre en communication de fluide ladite chambre (133) avec un premier trou formé dans ladite extrémité porte-outil (103),
ledit ensemble d'usinage (101) étant configuré de telle sorte que lorsque ladite chambre (133) est alimentée pneumatiquement, ledit au moins un arbre (102) passe de ladite première position non opérationnelle à ladite deuxième position opérationnelle, ou inversement, et ledit fluide s'écoule via ledit trou de ladite extrémité porte-outil (103) ;
**caractérisé en ce que**
ledit au moins un arbre (102) comprend en outre, au niveau de la deuxième extrémité (106) correspondante, un canal (10, 30) pour relier le fluide entre ledit premier canal traversant (2) et ladite chambre (133) de manière à permettre le passage dudit gaz, lorsque la chambre (133) est alimentée pneumatiquement, de la chambre (133) au premier canal traversant (2) dudit au moins un arbre (102).

2. L'ensemble d'usinage (101) selon la revendication précédente, **caractérisé en ce qu'**il y a, au niveau de la deuxième extrémité (106) dudit au moins un arbre (102), un corps de piston (130) destiné à déplacer ledit au moins un arbre (102) et à coulisser dans ladite chambre (133) de façon intégrale avec ledit au moins un arbre (102), ledit corps de piston (130) ayant un trou longitudinal (10), parallèle audit axe longitudinal (X1), non fermé et destiné au passage dudit gaz, lorsque la chambre (133) est alimentée pneumatiquement, de la chambre (133) au premier canal traversant (2) dudit au moins un arbre (102), ledit ensemble d'usinage (101) étant configuré de telle sorte que, lorsque ladite chambre (133) est alimentée pneumatiquement, ledit gaz agit sur ledit corps de piston (130) pour déplacer ledit au moins un arbre (102) de ladite première position non opérationnelle à ladite deuxième position opérationnelle, et ledit gaz passe de ladite chambre (133) audit premier canal traversant (2) à travers ledit trou longitudinal (10) dudit corps de piston (130).

3. L'ensemble d'usinage (101) selon la revendication 1, **caractérisé en ce qu'**il y a, au niveau de la deuxième extrémité (106) dudit au moins un arbre (102), un corps de piston (130) destiné à déplacer ledit au moins un arbre (102) et à coulisser dans ladite chambre (133) de façon intégrale avec ledit au moins un arbre (102), **en ce qu'**au niveau de la deuxième extrémité (106) dudit au moins un arbre (102) un canal (30) est formé dans le corps dudit au moins un arbre (102) et destiné au passage dudit gaz, lorsque la chambre (133) est alimentée pneumatiquement, de la chambre (133) au canal traversant (2) dudit au moins un arbre (102), ledit ensemble d'usinage (101) étant configuré de telle sorte que, lorsque ladite chambre (133) est alimentée pneumatiquement, ledit gaz agit sur ledit corps de piston (130) pour déplacer ledit au moins un arbre (102) de ladite deuxième position opérationnelle à ladite première position non opérationnelle, et ledit gaz passe de ladite chambre (133) audit canal traversant (2) à travers ledit canal (30) formé dans le corps dudit au moins un arbre (102).

4. L'ensemble d'usinage (101) selon l'une quelconque des revendications précédentes, **caractérisé en ce qu'**il comprend un outil (1) pour traiter ledit produit semi-fini pour l'enlèvement de matière, ledit outil (1) ayant aux deux extrémités, le long de l'axe longitudinal (Y1) correspondant, respectivement, une pointe (3) et une tête d'accouplement (4), ledit outil (1) étant accouplé de façon amovible à l'extrémité porte-outil (103) dudit au moins un arbre (102) au moyen de ladite tête d'accouplement (4), ledit ensemble d'usinage (101) étant configuré de telle sorte que lorsque ledit outil (1) est accouplé audit arbre (102) et lorsque la chambre (133) est alimentée pneumatiquement, l'arbre (102) passe de ladite première position non opérationnelle à ladite deuxième position opérationnelle, ou inversement, la pointe (3) de l'outil (1) est en mesure d'agir sur le produit semi-fini pour l'enlèvement de matière, et ledit gaz s'écoulant est en mesure d'évacuer la matière enlevée.

5. L'ensemble d'usinage (101) selon la revendication précédente, **caractérisé en ce que** ledit outil (1) comprend au moins un trou traversant (5, 6) dans le corps dudit outil (1) depuis ladite pointe (3) jusqu'à ladite tête d'accouplement (4), ledit outil (1) étant configuré de telle sorte que, lorsqu'il est accouplé audit arbre (102), ledit trou traversant (5, 6) est en communication de fluide avec le premier canal traversant (2) dudit arbre (102) à travers ledit premier trou formé dans ladite extrémité porte-outil (103) de manière à ce que, lorsque la chambre (133) est alimentée pneumatiquement, l'arbre (102) passe de ladite première position non opérationnelle à ladite deuxième position opérationnelle, ou inversement, la pointe (3) de l'outil (1) soit en mesure d'agir sur le produit semi-fini pour enlever de la matière, et ledit gaz s'écoule à travers ledit trou traversant (5, 6) pour évacuer la matière enlevée.

6. L'ensemble d'usinage (101) selon l'une quelconque des revendications de 1 à 4, **caractérisé en ce que** ledit au moins un arbre (102) comprend un ou plusieurs mini-canaux (14) en communication de fluide avec ledit premier trou formé dans l'extrémité porte-outil (103), **en ce qu'**il est configuré de manière à ce que, en cours d'utilisation, lorsqu'un outil est accouplé à l'extrémité porte-outil (103) et l'arbre (102) est dans ladite deuxième position opérationnelle, ledit fluide s'écoule desdits un ou plusieurs mini-canaux (14).

7. L'ensemble d'usinage (101) selon l'une quelconque des revendications précédentes, **caractérisé en ce qu'**il y a, au niveau de l'extrémité porte-outil (103) de l'arbre (102), un logement (7) pour la tête d'accouplement (4) dudit outil (1).

8. L'ensemble d'usinage (101) selon les revendications 5 et 7, **caractérisé en ce que** ledit logement (7) est en communication de fluide avec ledit premier trou dudit canal traversant (2) formé dans ladite extrémité porte-outil (103).

9. L'ensemble d'usinage (101) selon la revendication 7 ou 8, **caractérisé en ce qu'**il y a, dans ledit logement (7), un siège radial intérieur (8) et un joint d'étanchéité (9), en particulier un joint torique, logé dans ledit siège radial (8).

10. L'ensemble d'usinage (101) selon la revendication 4, **caractérisé en ce que** ledit outil comprend un joint d'étanchéité au niveau de ladite tête d'accouplement (4).

11. L'ensemble d'usinage (101) selon l'une quelconque des revendications précédentes, **caractérisé en ce qu'**une portion (11) du premier canal traversant (2) de l'arbre (102) a un diamètre inférieur au diamètre de la portion restante dudit canal traversant (2) afin de calibrer le débit du fluide de la chambre (133) au premier canal traversant (2).

12. L'ensemble d'usinage (101) selon la revendication précédente, **caractérisé en ce que** ladite portion de diamètre inférieur du premier canal traversant (2) correspond à sa portion terminale (11) au niveau de la deuxième extrémité (106) de l'arbre (102).

13. L'ensemble d'usinage (101) selon l'une quelconque des revendications précédentes, **caractérisé en ce qu'**il y a, au niveau de la deuxième extrémité (106) de l'arbre (102), une broche à vis (166) qui peut être accouplée de façon amovible à ladite deuxième extrémité (106) de l'arbre (102).

14. L'ensemble d'usinage (101) selon la revendication précédente, **caractérisé en ce qu'**il y a, au niveau de la tête de ladite broche à vis (166), un siège extérieur (12) et **en ce qu'**il y a un joint d'étanchéité (13) dans ledit siège extérieur (12), de préférence le joint d'étanchéité (13) étant réalisé en PTFE.

15. L'ensemble d'usinage (101) selon l'une quelconque des revendications précédentes, **caractérisé en ce qu'**il comprend au moins deux arbres (102), en particulier au moins deux arbres de mandrin (102), qui peuvent être sélectionnés individuellement.

16. L'ensemble d'usinage (101) selon la revendication précédente, **caractérisé en ce qu'**il comprend un dispositif de contrôle et de gestion pour commander individuellement chaque arbre (102).

17. L'ensemble d'usinage (101) selon l'une quelconque des revendications 1 - 6 et 10 - 16, **caractérisé en ce qu'**il y a, au niveau de l'extrémité porte-outil (103) de l'arbre (102), une tête porte-outils (21) pour tenir au moins un outil (1).

18. L'ensemble d'usinage (101) selon la revendication précédente, **caractérisé en ce que** ladite tête porte-outils (21) comprend un autre trou (24) et un autre canal traversant, destiné à mettre en communication de fluide ledit premier trou formé dans ladite extrémité porte-outil (103) avec ledit autre trou (24) formé dans ladite tête porte-outils (21), ledit ensemble d'usinage (101) étant configuré de telle sorte que, lorsque ladite chambre (133) est alimentée pneumatiquement, ledit au moins un arbre (102) se déplace de ladite première position non opérationnelle à ladite deuxième position opérationnelle, ou inversement, et ledit gaz, s'écoulant dudit autre trou (24), ou en transit à travers celui-ci pour s'écouler ensuite dudit ensemble d'usinage (101), est en mesure d'évacuer la matière enlevée.

19. L'ensemble d'usinage (101) selon la revendication 17 ou 18, **caractérisé en ce qu'**il comprend un outil (1) accouplé de façon amovible à ladite tête porte-outils (21) et **en ce qu'**il est configuré de manière à être positionné dans ladite tête porte-outils (21), avec l'axe longitudinal (Y1) correspondant normal audit axe longitudinal (X1) dudit au moins un arbre (102).

20. L'ensemble d'usinage (101) selon l'une quelconque des revendications 17 - 19, **caractérisé en ce qu'**il comprend une paire d'arbres (102) positionnés avec les axes (X1) correspondants parallèles l'un à l'autre, et actionnés de façon essentiellement synchrone lorsqu'ils passent de ladite première position non opérationnelle à ladite deuxième position opérationnelle, ou inversement, et **en ce que** ladite tête porte-outils (21) est fixée à chacun desdits arbres (102), de telle sorte que lors du passage entre ladite première position non opérationnelle et la deuxième position opérationnelle, ou inversement, ladite tête porte-outils (21) effectue un mouvement de translation parallèle audit axe longitudinal (X1).

21. L'ensemble d'usinage (101) selon l'une quelconque des revendications 17 - 20, **caractérisé en ce qu'**il comprend des moyens de déplacement (20) comprenant un arbre de transmission du mouvement de rotation (1021), **en ce que** ladite tête porte-outils (21) comprend des moyens (22, 23) pour la transmission dudit mouvement de rotation desdits moyens de déplacement (20) audit outil (1).

22. L'ensemble d'usinage (101) selon les revendications 20 et 21, **caractérisé en ce que** ledit arbre de transmission du mouvement de rotation (1021) est interposé entre ladite paire d'arbres (102), et **en ce que** ledit arbre de transmission du mouvement de rotation (1021) comprend des moyens télescopiques de manière à être conçu pour transmettre en permanence un mouvement de rotation par l'intermédiaire desdits moyens de transmission (22, 23) lorsque ledit arbre (102) passe, de façon essentiellement synchrone, de ladite première position non opérationnelle à ladite deuxième position opérationnelle, ou inversement.

23. L'ensemble d'usinage (101) selon l'une quelconque des revendications 20 - 22, **caractérisé en ce qu'**il y a, dans ladite tête porte-outils (21), un autre canal (40) qui est destiné à mettre en communication de fluide lesdits canaux traversants (6) dans deux ou plus outils (1) supportés par ladite tête porte-outils (21).
